(19) Europäisches Patentamt
European Patent Office
Office européen des brevets

(11) Veröffentlichungsnummer: **0 171 045**
**B1**

(12) # EUROPÄISCHE PATENTSCHRIFT

(45) Veröffentlichungstag der Patentschrift: **14.11.90**

(51) Int. Cl.$^5$: **G 11 B 7/24**

(21) Anmeldenummer: **85109745.1**

(22) Anmeldetag: **02.08.85**

(54) **Optisches Aufzeichnungsmedium.**

(30) Priorität: **10.08.84 DE 3429438**

(43) Veröffentlichungstag der Anmeldung:
**12.02.86 Patentblatt 86/07**

(45) Bekanntmachung des Hinweises auf die Patenterteilung:
**14.11.90 Patentblatt 90/46**

(84) Benannte Vertragsstaaten:
**CH DE FR GB IT LI NL**

(56) Entgegenhaltungen:
**EP-A-0 007 574**
**EP-A-0 141 512**
**DE-A-3 324 770**

(73) Patentinhaber: **BASF Aktiengesellschaft**
**Carl-Bosch-Strasse 38**
**D-6700 Ludwigshafen (DE)**

(72) Erfinder: **Etzbach, Karl-Heinz, Dr.**
**Bensheimer Ring 9a**
**D-6710 Frankenthal (DE)**
Erfinder: **Neumann, Peter, Dr.**
**Franz-Schubert-Strasse 1**
**D-6908 Wiesloch (DE)**
Erfinder: **Dust, Matthias, Dr.**
**Bismarckplatz 15-17**
**D-6800 Mannheim 1 (DE)**
Erfinder: **Ringsdorf, Helmut, Prof. Dr.**
**Kehlweg 41**
**D-6500 Mainz-Gonsenheim (DE)**
Erfinder: **Schmidt, Hans-Werner**
**Holzstrasse 18**
**D-6500 Mainz (DE)**
Erfinder: **Baur, Guenter**
**Waldhofstrasse 8d**
**D-7800 Freiburg (DE)**
Erfinder: **Windscheid, Friedrich**
**Eckertstrasse 4**
**D-7800 Freiburg (DE)**
Erfinder: **Kiefer, Rudolf**
**Im Gottesacker 20**
**D-7801 Voerstetten (DE)**

**EP 0 171 045 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein optisches Aufzeichungsmedium, das auf einem Träger eine flüssig-kristalline, farbstoffhaltige Polymerschicht trägt.

Optische Datenspeicher sind bekannt. Durch Licht einer bestimmten Wellenlänge, vorzugsweise durch Laserstrahlen oder durch andere geeignete energiereiche Strahlen wird stellenweise das Reflexionsverhalten eines lichtempfindlich beschichteten Trägers, der aus Glas oder einem geeigneten Kunststoff besteht, verändert. Beim Lese-Prozeß werden dann beschriebene und nicht beschriebene Stellen erkannt und daraus das ursprüngliche Signal rekonstruiert. Eine Übersicht über die vorhandenen Systeme wird z.B. von H. Brody Laser Focus August *1981,* S. 47 ff gegeben, dort findet sich auch weitere Literatur.

Die Verwendung von Farbstoffen zur Lichtabsorbtion in optischen Speichern ist bekannt. In der US—A—40 97 895 ist z.B. ein Aufzeichnungsträger beschrieben, der aus einem scheibenförmigen Grundkörper aus Glas und einer lichtreflektierenden Aluminiumschicht besteht, welche mit einer Farbstoffschicht bedeckt ist. Ein Laserstrahl löst die absorbierende Farbstoffschicht ab, verdampft oder schmilzt sie und legt somit die lichtreflektierende Schicht frei. Die auf diese Weise aufgezeichnete Information kann wieder durch einen Laser gelesen werden.

Aus der US—A—43 80 769 ist ein Aufzeichnungsträger bekannt, der als lichtabsorbierende Schicht Azofarbstoffe in einem polymeren Bindemittel enthält. Weiterhin sind optische Speichersysteme bekannt, die als absorbierende Verbindungen Oxazine (JP—A—132 231/1983), Cyaninfarbstoffe (JP—A—11 2 790/1983 und 125 246/1983), Phthalocyaninverbindungen (EP—A—84 729, US—A—42 41 355, JP—A—56 892/1983) und Naphthochinon-1,4-Verbindungen (EP—A—97 929) verwenden.

Es sind auch löschbare Aufzeichnungsträger bekannt, welche z.b. die Photochromie von Farbstoffen zur Informationsspeicherung benutzen. In der DE—A—30 07 296 wird ein an ein Polymer gebundener, indigoider photochromer Farbstoff verwendet, in der DE—A—32 20 257 werden photochrome Spiroverbindungen als strahlungsempfindliche Materialien für optische Speicher beschrieben.

Niedermolekulare flüssig-kristalline Materialien werden als Lichtmodulatoren in elektrooptischen Anzeigen eingesetzt, das optische Verhalten der Flüssigkristallschicht wird üblicherweise durch ein angelegtes elektrisches Feld verändert (siehe z.B. H. Kelker und R. Hatz, Handbook of Liquid Crystals, *1980,* S. 603 ff oder B. Bahadur, Mol. Cryst. Liq. Crist. *1983,* Vol. 99, S. 345—374).

Die Ansteuerung von dünnen Flüssigkristallschichten mit Laserstrahlen ist gleichfalls bekannt und wird z.B. von F. J. Kahn in Appl. Phys. Lett., Vol. 22, 111 ff (1973) für die Herstellung hochauflösender graphischer Displays beschrieben. Die eingestrahlte Laserenergie (1,06 µm) wird hierbei von einer $In_{2-x}Sn_xO_{3-y}$-Elektrode absorbiert. Wie von H. Birecki, S. Naberhuis und F. J. Kahn in Optical Storage Media, Alan E. Bell, Albert A. Jamberdino, Editors, Proc. SPIE 420, 194—199 (1983) gezeigt wird, ist nach dem gleichen Prinzip auch die Herstellung eines löschbaren optischen Speichers möglich.

T. Urabe, K. Arai und A. Ohkoshi (J. Appl. Phys. *54* (3), 1552—1558 (1983)) verwenden dichroitische Farbstoffe, um in smektischen Flüssigkristallen die eingestrahlte Energie (Helium-Neon-Laser) zu absorbieren.

In der DE—A—26 18 023 wird eine mit einem Galliumarsenidlaser adressierbare Flüssigkristallzelle beschrieben, bei der die Laserenergie von einer farbstoffhaltigen Schicht absorbiert wird.

Wie in der DE—A—33 37 316 gezeigt wird, kann eine Flüssigkristallzelle auch mit einem Elektronenstrahl angesteuert werden.

Flüssigkristalline Phasen bildende Polymere, die mesogene Gruppen in der Haupt- oder Seitenkette tragen sind bekannt, eine Übersicht über diese Verbindungsklasse wird z.B. in Polymer Liquid Crystals, A. Ciferri, W. R. Krigbaum und R. B. Meyer, Academic Press New York, 1982, gegeben.

Die Verwendung von flüssig-kristalline Phasen bildenden Polymeren für sich selbst verstärkende Kunststoffe wird z.B. von J. H. Wendorff in Kunststoffe 73 (1983) 9, 524—528, referiert.

Flüssigkristalline Polymere ziegen prinzipiell das gleiche Verhalten wie niedermolekulare Flüssigkristalle und sind z.B. im elektrischen Feld orientierbar. (H. Ringsdorf und R. Zentel, Makromol. Chem. *183,* 1245—1256 (1982), H. Pranoto und W. Haase, Mol. Cryst. Liq. Cryst. *98,* 299—308 (1983)). Die thermische Ansteuerung eines flüssigkristallinen Polyacrylats wurde erstmals von V. P. Shibaev et al, Polym. Commun. *24,* 364—365 (1983) verwirklicht.

Aus der DE—A—3 324 770 sind flüssig-kristalline Phasen bildende Polymere bekannt, die auch Färbemittel enthalten können. Diese Färbemittel können in der das Flüssigkristallpolymerisat enthaltenden Schicht gelöst oder dispergiert sein. Es ist auch möglich, zwischen der das Flüssigkristallpolymerisat enthaltenden Schicht und dem Schichtträger oder zwischen der das Flüssigkristallpolymerisat enthaltenden Schicht und der Elektrode eine Farbstoffschicht vorzusehen. Der Farbstoff/das Pigment soll bei der Temperatur, bei der das Flüssigkristallpolymerisat einen Phasenübergang erfährt, nur schwer sublimierbar sein. Aus der Offenbarung der DE—A—3 324 770 ergibt sich, daß es für das System ohne Bedeutung ist, ob der Farbstoff/das Pigment in dem flüssig-kristalline Phasen bildenden Polymer gelöst oder dispergiert ist oder in einer von der Flüssigkristallpolymerschicht getrennten Schicht vorhanden ist.

Aufgabe der vorliegenden Erfindung war es, ein optisches Aufzeichnungsmedium zu schaffen, das die eingeschriebene Information über lange Zeit stabil speichert und das gegebenenfalls lokal oder granzflächig löschbar ist. Außerdem sollte, das Aufzeichnungsmedium mit einem Laser beschrieben, gelesen und gegebenenfalls gelöscht werden können.

Es wurde gefunden, daß ein sehr gut geeignetes optisches Aufzeichnungsmedium aus einer Trägerschicht und einer Farbstoff enthaltenden Polymerschicht vorliegt, wenn die mindestens einen Farbstoff chemisch gebunden enthaltende Polymerschicht ein flüssig-kristalline Phasen bildendes Polymer (III) ist, das aus Einheiten der Formeln

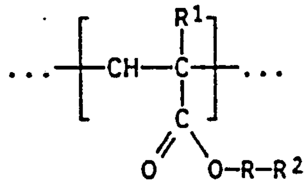
(I)

und

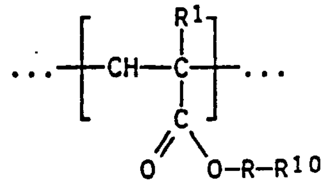
(II)

aufgebaut ist, worin

$R^1$ für Wasserstoff oder Methyl,

R für $-(-CH_2-)_n-$ oder $-(-CH_2-CH_2-O-)_m-CH_2-CH_2-$,

n für 2 bis 25,

m für 0 bis 2,

$R^2$ für 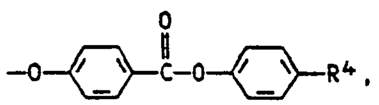, 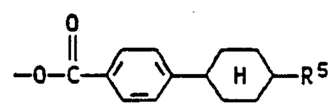,

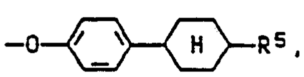, 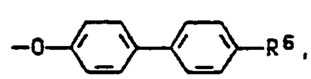,

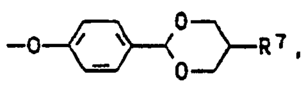, 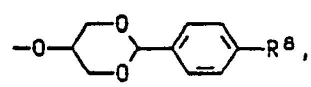,

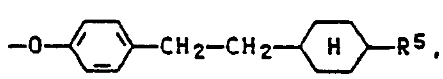, 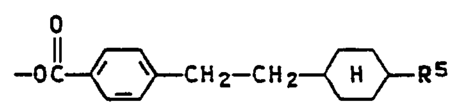,

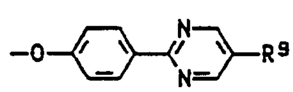 oder 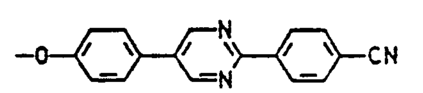.

$R^4$ für Cyan, Chlor, Brom, Nitro, Alkyl, Alkoxy oder durch Cyan, Chlor, Alkyl oder Alkoxy in 4-Stellung substituiertes Phenyl,

$R^5$ für Alkyl,

$R^6$ für Cyan, 4-Cyanphenyl oder Alkoxy,

$R^7$ für Alkyl oder Alkoxy,

$R^8$ für Cyan, Alkyl, Alkoxy, Cyclohexyl, 4-Alkylcyclohexyl, 4-Cyanphenyl, 4-Alkylphenyl oder 4-Alkoxyphenyl und

$R^9$ für Cyan, Alkyl, Alkoxy, 4-Cyanphenyl oder 4-Alkoxyphenyl, wobei die Alkyl und Alkoxy 1 bis 25 C-Atome enthalten, wobei R und $R^2$ gleich oder verschieden sein können, und

$R^{10}$ für einen Rest eines pleochroitischen Farbstoffs stehen, der über O, S oder N an R gebunden ist und der entsprechend der Wellenlänge des verwendeten Laser ausgewählt wird.

Die Polymerschicht kann sich zwischen zwei Trägern aus Glas oder Kunststoff befinden, von denen jeder auf der Innenseite mit einer transparenten Elektrode versehen sein kann. Als transparente elektrisch leitende Schichten können die bekannten, z.B. mit Zinn dotierte Indiumoxid-Schichten (ITO), verwendet werden. Die Verwendung einer transparenten und einer reflektierenden Elektrode ist ebenfalls möglich. Geeignete lichtreflektierende Materialien sind z.B. Aluminium, Rhodium, Gold und Kupfer.

Zur Erzielung einer einheitlichen Textur des flüssig-kristallinen Polymers muß die Oberfläche der Elektroden gegebenenfalls behandelt werden. Methoden zur Erzeugung einer einheitlichen homogen oder homeotrop orientierten Flüssigkristallschicht sind z.B. in H. Kelker und R. Hatz, Handbook of Liquid Crystals, 511 ff, 1980, beschrieben.

Die Information wird beispielsweise mit einem Laser in eine einheitlich orientierte flüssigkristalline Polymerschicht eingeschrieben. Hierbei erwärmt sich das Polymere z.B. lokal über eine Phasenübergangstemperatur (z.B. smektisch → nematisch) bzw. über den Klärpunkt (z.B. nematisch → isotrop). Beim Abkühlen tritt an der beschriebenen Stelle eine Veränderung der Lichtstreuung, der optischen Aktivität, der Doppelbrechung oder der Absorption ein, und kann im Glaszustand des Polymers stabil eingefroren werden. Die eingeschriebene Information kann gegebenenfalls durch Anlegen eines elektrischen Feldes und/oder gleichzeitige lokale oder ganzflächige Erwärmung wieder gelöscht werden.

Das erfindungsgemäße Aufzeichnungsmaterial ermöglicht eine kontrastreiche Speicherung der eingeschriebenen Information. Es besitzt eine hohe Empfindlichkeit, eine gute Auflösung und, da ein Kristallisieren der Polymerschicht nicht möglich ist, eine hervorragende Langzeitstabilität.

Die flüssigkristallinen Copolymere (III) bildenden nematische, smektische, nematische und smektische oder, wie in EP—A—7574 beschrieben, cholesterische Phasen.

Farbstoffreste $R^{10}$ sind z.B.:

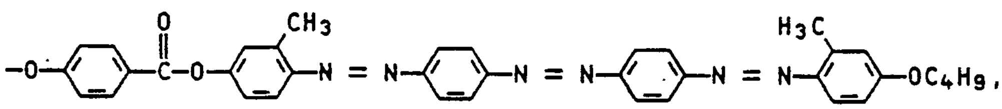
(gelb)

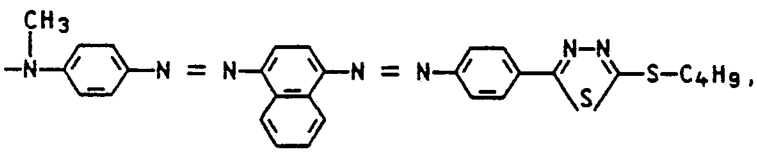
(rot)

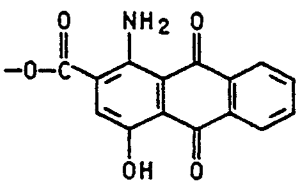
,
(violett)

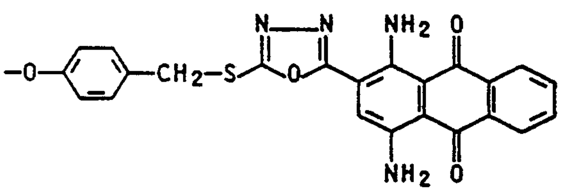
,
(blau)

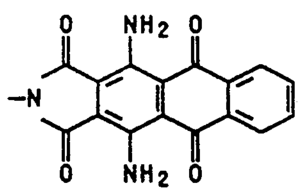
und
(blau)

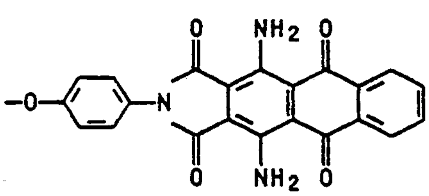
(blau)

Besonders bevorzugt sind Copolymere, deren Polymerkette aus Einheiten der Formeln (Ia) und (IIa) (=Polymer IV) oder aus solchen der Formeln (Ia) und (IIb) (=Polymer V) aufgebaut sind. Die Synthese und die Analytik der Copolymere ist in der DE—A—32 11 400 beschreiben.

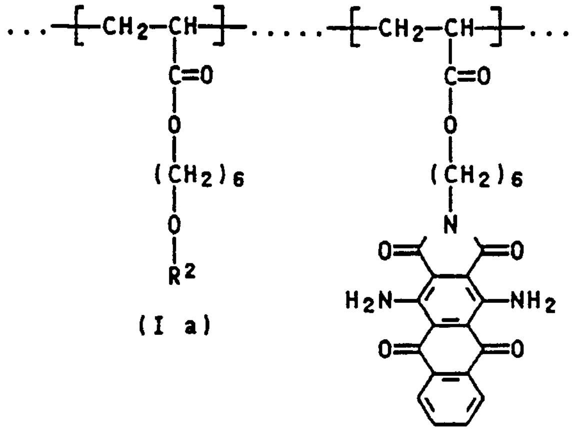

(I a)

(II a)

| Polymer | $R^2$ | enthält Gew.-% Farbstoff |
|---|---|---|
| IV. 1) | 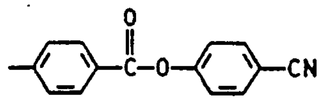 | 2 |
| IV. 2) | 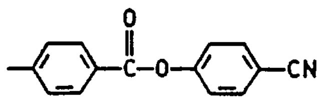 | 15 |
| IV. 3) | 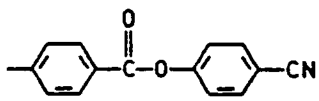 | 30 |
| IV. 4) | 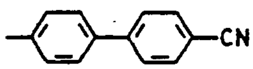 | 2 |
| IV. 5) | 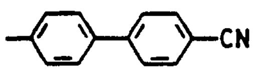 | 12 |
| IV. 6) | 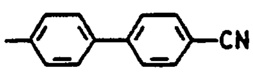 | 36 |
| IV. 7) | 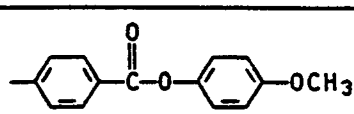 | 2 |

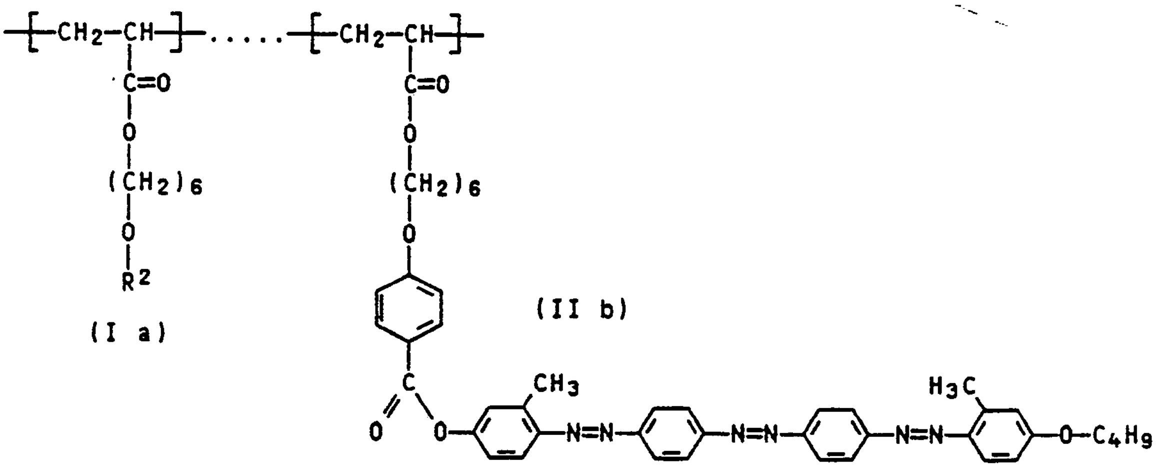

(I a)

(II b)

| Polymer | $R^2$ | enthält Gew.-% Farbstoff |
|---|---|---|
| V. 1) | 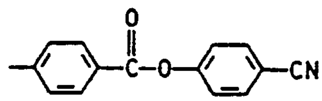 | 2 |
| V. 2) | 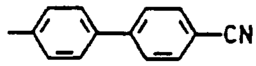 | 2 |
| V. 3) | 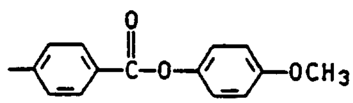 | 2 |

In *Tabelle 1* sind die mittels Differentialthermoanalyse und Polarisationsmikroskopie bestimmten Phasenübergänge der Polymere IV. 1) bis IV. 7) und V. 1) bis V. 3) und der Ordnungsgrad S für die Polymeren IV. 1), IV. 4), IV. 7) und V. 1) bis V. 3) zusammengefaßt. Die Bestimmung des Ordnungsgrades erfolgte an homogen orientierten Proben (Schichtdicke: 10 µm, Randorientierung: Polyimid) bei Raumtemperatur.

Der Ordnungsgrad S wurde nach der bekannten Gleichung

$$S = \frac{CR-1}{CR+2}$$

bestimmt. Das dichroitische Verhältnis CR wurde durch Messung der Extinktionen $E''$ (Messung mit parallel zur Vorzugsrichtung der nematischen Phase polarisiertem Licht) und $E^{\perp}$ (Messung mit senkrecht zur Vorzugsrichtung der nematischen Phase polarisiertem Licht) nach der Beziehung

$$CR = \frac{E''}{E^{\perp}}$$

ermittelt.

Tabelle 1

| Polymer | Phasenübergänge (g: glasig, n: nematisch, s: smektisch, i: isotrop) | Ordnungsgrad |
|---|---|---|
| IV.1) | g 29 n 130 i | 0,67 (bei 682 nm) |
| IV.2) | g 34 n 111 i | |
| IV.3) | g 50 n 91 i | |
| IV.4) | g 35 n 132 i | 0,69 (bei 682 nm) |
| IV.5) | g 42 n 115 i | |
| IV.6) | g 55 n 89 i | |
| IV.7) | g 29 $S_A$ 95 n 119 i | 0,79 (bei 673 nm) |
| V. 1) | g 28 n 124 i | 0,70 (bei 450 nm)<br>0,72 (bei 500 nm)<br>0,69 (bei 550 nm) |
| V. 2) | g 30 n 117 i | 0,68 (bei 450 nm)<br>0,72 (bei 500 nm)<br>0,70 (bei 550 nm) |
| V. 3) | g 26 $S_A$ 92 n 121 i | 0,78 (bei 450 nm)<br>0,84 (bei 500 nm)<br>0,81 (bei 550 nm) |

Die Laseransteuerung des Aufzeichnungsträgers und das Lesen der gespeicherten Information erfolgt in bekannter Weise, z.B. H. Birecki, S. Naberhuis u. F. J. Kahn in: Optical Storage Media, Proc. SPIE 420, 194—199 (1983).

I. Aufbau des Aufzeichnungsmediums

Der Aufbau ist in der Fig. dargestellt. Das farbstoffhaltige flüssigkristalline Polymere (c) befindet sich zwischen zwei Glas- oder PMMA-trägern (a), wobei der untere Träger gegebenenfalls eine Reflexionsschicht (z.B. Aluminium) aufweist. Eine homogen-planare Textur des Polymeren wird entweder durch eine schräg aufgedampfte Siliziumoxidschicht oder eine geriebene Polyimidschicht (b) erreicht. Eine homöotrope Textur des polymeren wurde durch eine Silanbeschichtung (b) auf dem Träger (a) erreicht.

Die Orientierung kann durch Tempern im Magnetfeld oder im elektrischen Feld noch weiter vereinheitlicht werden. Die Schichtdicke wird durch einen Abstandhalter (d), der z.B. aus Mylarfolie oder Glasfasern besteht, festgelegt.

II. Ausführungsbeispiele

Beispiel 1

Der Aufbau des Aufzeichnungsmediums war wie unter I angegeben. Die Dicke der Polymerschicht (c) betrug 8 µm. Als Polymeres wurde das Polymer IV. 7 verwendet. Die Träger waren auf der Innenseite mit einer Polyimidschicht versehen. Durch mehrstündiges Tempern bei 116 bis 117°C (d.h. etwas unterhalb der Klärtemperatur) wurde das Polymer (c) homogen-planar orientiert.

Das Medium wurde bei Raumtemperatur mit einem He-Ne-Laser beschrieben (Fokus: 5 µm; Leistung: 4 mW).

Die eingeschriebene Information kann unter dem Mikroskop mit gekreuzten Polfiltern festgestellt und sichtbar gemacht werden. Durch Tempern bei 116 bis 117°C kann die Aufzeichnung gelöscht werden.

Beispiel 2

Der Aufbau des Aufzeichnungsmediums war wie unter I angegeben. Dicke der Polymerschicht (c) 3 µm. Verwendet wurde das Polymer IV. 4. Die Träger (a) hatten auf der Innenseite eine schräg aufgedampfte Siliciumoxidschicht. Die Polymerschicht (c) wurde durch mehrstündiges Tempern bei 126 bis 127°C homogen-planar orientiert.

Das Medium wurde wie in Beispiel 1 mit einem Ne-He-Laser beschrieben (Fokus: 3 µm; Leistung: 4 mW).

Die Aufzeichnung konnte durch Tempern bei 126 bis 127°C gelöscht werden.

Beispiel 3

Der Aufbau des Aufzeichnungsmediums war wie unter I. angegeben. Die Träger (a) waren auf den Innenseiten mit Silan beschichtet. Es wurde das Polymer IV. 7 verwendet.

Durch Tempern bei 116 bis 117°C wurde eine homöotrope Textur des flüssigkristallinen Polymeren erhalten.

Das Medium kann mit einem He-Ne-Laser beschrieben werden. Die Aufzeichnung wird durch Tempern bei 117°C gelöscht.

Beispiel 4

Der Aufbau und die Ansteuerung des Aufzeichnungsmediums erfolgte wie im Beispiel 3 beschrieben, jedoch wurde als Polymeres das Polymer IV. 2 verwendet. Es werden transparent leitfähig beschichtete Träger (a) verwendet. Die homöotrope Ausgangstextur kann durch Anlegen eines elektrischen Feldes und durch eine zusätzliche Silanbeschichtung erreicht werden. Die eingeschriebene Information kann durch Tempern und gleichzeitiges Anlegen eines elektrischen Feldes wieder gelöscht werden. Der Löschvorgang erfolgt dabei rascher als beim Medium des Beispiels 3.

Beispiel 5

Der Aufbau und die Ansteuerung des Aufzeichnungsmediums erfolgte wie im Beispiel 4 beschrieben. Der obere Träger wies jedoch eine transparente leitfähige Beschichtung (ITO) und der untere eine reflektierende leitfähige Beschichtung z.B. Aluminium auf.

Beispiel 6

Der Aufbau und die Ansteuerung des Aufzeichnungsmediums erfolgte wie im Beispiel 4 oder 5, es wurde jedoch durch eine schräg aufgedampfte Siliciumoxidschicht eine homogene Randorientierung des Polymeren IV. 2 erzielt und eine nahezu homeotrope Ausgangstextur durch Anlegen eines elektrischen Feldes erreicht.

Beispiel 7

Der Aufbau des Aufzeichnungsmediums war der gleiche wie beim Beispiel 2. Zusätzlich weisen die Träger auf den Innenseiten eine transparente leitfähige Beschichtung auf. Als (c) wurde das Copolymer IV. 4 verwendet. Die Information wird bei angelegtem elektrischem Feld von 10 V/50 mit dem Laser eingeschrieben. Der Laser bringt das flüssigkristalline Polymer lokal in einen schaltfähigen Zustand und das angelegte elektrische Feld orientiert das Polymere an den beschriebenen Stellen um. Gelesen wird bei dieser Ausführungsform die hierdurch erzeugte Absorptionsänderung der Schicht an der beschriebenen Stelle.

Die Information kann durch Tempern wieder gelöscht werden.

Ein gleich gutes Ergebnis wird erhalten, wenn der obere Träger eine transparente elektrisch leitende Beschichtung und der untere Träger eine reflektierende leitfähige Beschichtung aufweist.

Beispiel 8

Der Aufbau des Aufzeichnungsmediums ist der gleiche wie im Beispiel 4. Als Polymere wurde das Polymer IV. 7 verwendet. Die homöotrope Ausgangstextur wurde durch eine Silanbeschichtung der Träger (a) erreicht.

Beim Einschreiben der Information mit einem He-Ne-Laser wird gleichzeitig ein elektrisches Feld angelegt (10 V/50 Hz). Gelesen wird wie in Beispiel 7 die Absorptionsänderung der Schicht an der eingeschriebenen Stelle.

## Patentansprüche

1. Optisches Aufzeichnungsmedium aus einer Trägerschicht und einer Farbstoff enthaltenden Polymerschicht, dadurch gekennzeichnet, daß die mindestens einen Farbstoff chemisch gebunden enthaltende Polymerschicht ein flüssig-kristalline Phasen bildendes Polymeres (III) ist, das aus Einheiten der Formeln

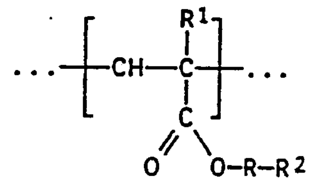

(I)

und

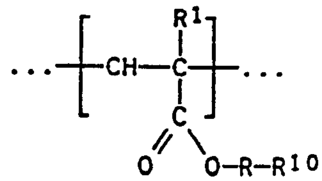

(II)

aufgebaut ist, worin

$R^1$ für Wasserstoff oder Methyl,

R für $—(—CH_2—)_n—$ oder $—(—CH_2—CH_2—O—)_m—CH_2—CH_2—$,

n für 2 bis 25,

m für 0 bis 2,

$R^2$ für 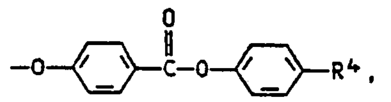, 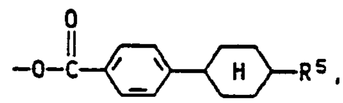,

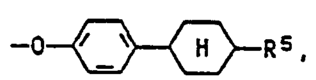, 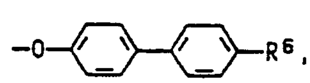,

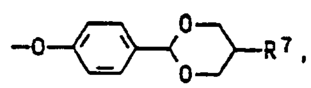, 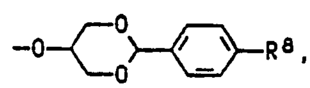,

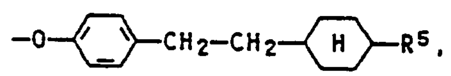, 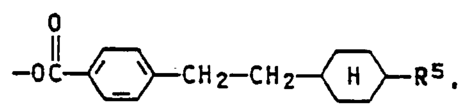,

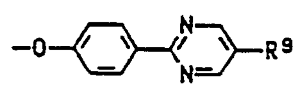 oder 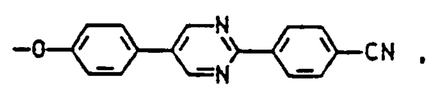.

$R^4$ für Cyan, Chlor, Brom, Nitro, Alkyl, Alkoxy oder durch Cyan, Chlor, Alkyl oder Alkoxy in 4-Stellung substituiertes Phenyl,

$R^5$ für Alkyl,

$R^6$ für Cyan, 4-Cyanphenyl oder Alkoxy,

$R^7$ für Alkyl oder Alkoxy,

$R^8$ für Cyan, Alkyl, Alkoxy, Cyclohexyl, 4-Alkylcyclohexyl, 4-Cyanphenyl, 4-Alkylphenyl oder 4-Alkoxyphenyl und

$R^9$ für Cyan, Alkyl, Alkoxy, 4-Cyanphenyl oder 4-Alkoxyphenyl, wobei die Alkyl und Alkoxy 1 bis 25 C-Atome enthalten, wobei R und $R^2$ gleich oder verschieden sein können, und

$R^{10}$ für einen Rest eines pleochroitischen Farbstoffs stehen, der über O, S oder N an R gebunden ist und der entsprechend der Wellenlänge des verwendeten Laser ausgewählt wird.

2. Optisches Aufzeichnungsmedium gemäß Anspruch 1, dadurch gekennzeichnet, daß das flüssigkristalline Phasen bildende Polymere eine nematische Phase ausbildet.

3. Optisches Aufzeichnungsmedium gemäß Anspruch 1, dadurch gekennzeichnet, daß das flüssigkristalline Phasen bildende Polymere eine nematische und eine smektische Phase ausbildet.

4. Optisches Aufzeichnungsmedium gemäß Anspruch 1, dadurch gekennzeichnet, daß das flüssigkristalline Phasen bildende Polymere eine colesterische Phase ausbildet.

## Revendications

1. Milieu d'enregistrement optique à une couche de support et une couche de polymère contenant un colorant, caractérisé par le fait que la couche de polymère, contenant, lié chimiquement, au moins un colorant, est un polymère (III), formant des phases à cristaux liquides, qui est constitué d'unités des formules

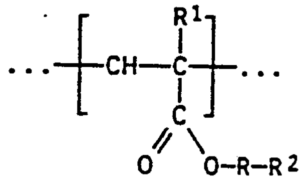
(I)

et

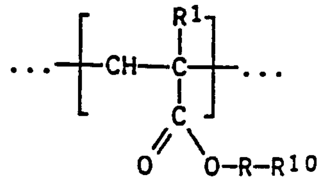
(II)

où

$R^1$ est mis pour hydrogène ou méthyle,
R, pour $-(-CH_2-)n-$ ou $-(-CH_2-CH_2-O-)_m-CH_2-CH_2-$,
n, pour 2 à 25,
m, pour 0 à 2,
$R^2$, pour

$R^2$ für 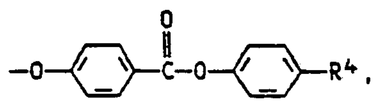 , 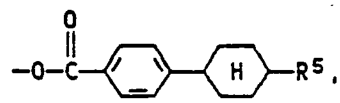 ,

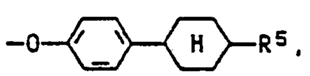 , 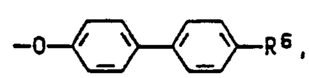 ,

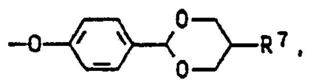 , 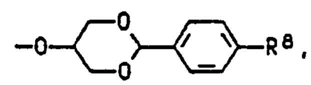 ,

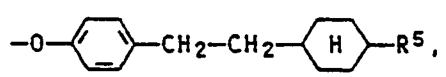 , 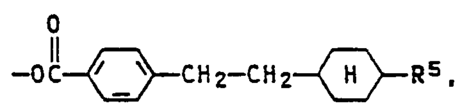 ,

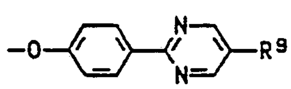 oder 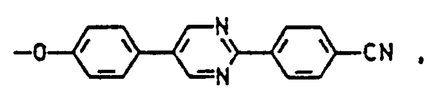 .

$R^4$ pour cyano, chlore, brome, nitro, alkyle, alcoxy ou phényle substitué en position 4 par cyano, chlore, alkyle ou alcoxy,
$R^5$ pour alkyle,
$R^6$ pour cyano, 4-cyanophényle ou alcoxy,
$R^7$ pour alkyle ou alcoxy,
$R^8$ pour cyano, alkyle, alcoxy, cyclohexyle, 4-alkylcyclohexyle, 4-cyanophényle, 4-alkylphényle ou 4-alcoxyphényle et,
$R^9$ pour cyano, alkyle, alcoxy, 4-cyanophényle ou 4-alcoxyphényle, les alkyle et alcoxy contenant 1 à 25 atomes C, R et $R^2$ pouvant être identiques ou différents, et
$R^{10}$, pour un reste d'un colorant pléochroïtique qui est relié à R par O, S ou N et qui est choisi en fonction de la longueur d'onde du laser utilisé.

2. Milieu d'enregistrement optique selon la revendication 1, caractérisé par le fait que le polymère formant des phases à cristaux liquides forme une phase nématique.

3. Milieu d'enregistrement optique selon la revendication 1, caractérisé par le fait que le polymère formant des phases à cristaux liquides forme une phase smectique.

4. Milieu d'enregistrement optique selon la revendication 1, caractérisé par le fait que le polymère formant des phases à cristaux liquides forme une phase colestérique.

**Claims**

1. An optical recording medium comprising a base and a dye-containing polymer layer, wherein the polymer layer, which contains one or more chemically bound dyes, is a polymer (III) which forms liquid-crystalline phases and is composed of units of the formulae

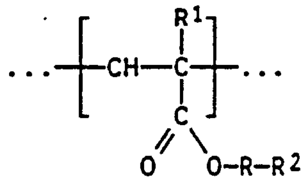

(I)

and

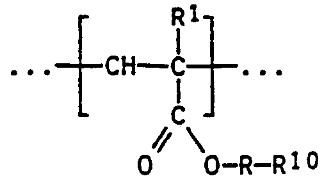

(II)

where $R^1$ is hydrogen or methyl,

R is $-(-CH_2-)_n-$ or $-(-CH_2-CH_2-O-)_m-CH_2-CH_2-$,

n is 2 to 25, and

m is 0 to 2,

$R^2$ is

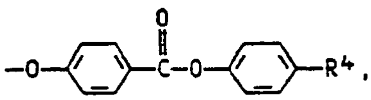,

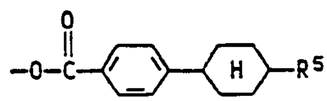,

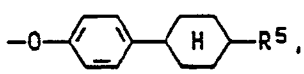,

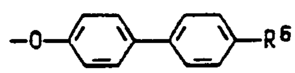,

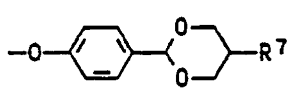,

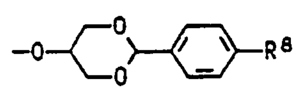,

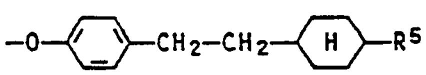,

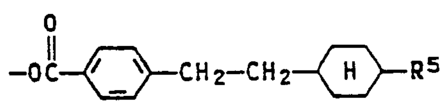,

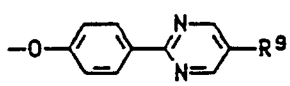

or

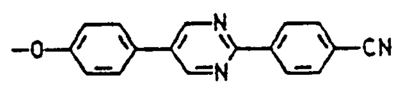.

$R^4$ is cyano, chlorine, bromine, nitro, alkyl or alkoxy or is phenyl which is substituted in the 4-position by cyano, chlorine, alkyl or alkoxy,

$R^5$ is alkyl,

$R^6$ is cyano, 4-cyanophenyl or alkoxy,

$R^7$ is alkyl or alkoxy,

$R^8$ is cyano, alkyl, alkoxy, cyclohexyl, 4-alkylcyclohexyl, 4-cyanophenyl, 4-alkylphenyl or 4-alkoxyphenyl and

$R^9$ is cyano, alkyl, alkoxy, 4-cyanophenyl or 4-alkoxyphenyl, the alkyl and alkoxy containing 1 to 25 carbon atoms and R and $R^2$ can be identical or different, and

$R^{10}$ is a radical of a pleochroic dye which is bonded to R via O, S or N and which is selected according to the wavelength of the laser used.

2. An optical recording medium as claimed in claim 1, wherein the polymer forming liquid-crystalline phases forms a nematic phase.

3. An optical recording medium as claimed in claim 1, wherein the polymer forming liquid-crystalline phases forms a nematic phase and a smectic phase.

4. An optical recording medium as claimed in claim 1, wherein the polymer forming liquid-crystalline phases forms a cholesteric phase.

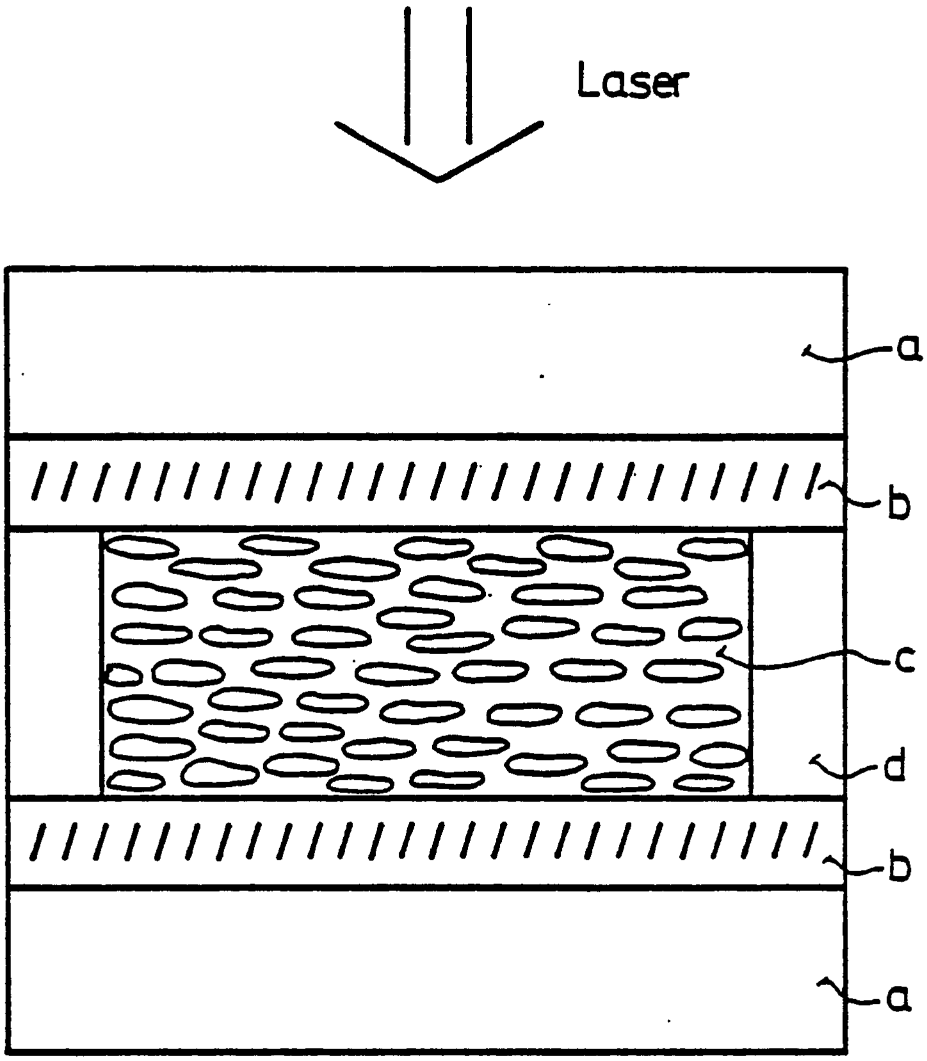
Laser
a
b
c
d
b
a